# EUROPEAN PATENT APPLICATION

(11) **EP 3 670 987 A1**
(43) Date of publication of application: **24.06.2020**
(21) Application number: 18846513.2
(22) Date of filing: 27.07.2018
(51) Int. Cl.: F16L 11/08

(54) **HIGH PRESSURE HOSE**

(30) Priority: 15.08.2017 JP 2017156833
(71) Applicant: Bridgestone Corporation, Tokyo 104-8340 (JP)
(72) Inventor: IKEHARA Kiyoshi, Tokyo 104-8340 (JP)
(74) Representative: Lang, Johannes
(86) International application number: PCT/JP2018/028319
(87) International publication number: WO 2019/035341

(57) **Abstract**

Provided is a high pressure hose including a reinforcing layer having a braided structure excellent in durability. In a high pressure hose including at least one reinforcing layer having a braided structure in which a steel cord formed by twisting a plurality of steel filaments is braided, a crossing angle θ between an outermost layer steel filament of an S-wound steel cord 120a and an outermost layer steel filament of a Z-wound steel cord 120b of a reinforcing layer having a braided structure on the innermost in the hose radial direction of the reinforcing layers having a braided structure is 76° or less.

## Description

### TECHNICAL FIELD

The present invention relates to a high pressure hose, and particularly, to a high pressure hose including a reinforcing layer having a braided structure excellent in durability.

### BACKGROUND ART

In general, a high pressure hose reinforced with a steel filament is used for a high pressure hose such as a hydraulic pump to withstand high pressure hydraulic oil. There are two types of reinforcing structures for such high pressure hoses, a spiral structure and a braided structure. The spiral structure refers to a structure in which a steel filament or the like is spirally wound around an inner layer tube, and the braided structure refers to a structure in which a steel filament or the like is braided and wound around an inner layer tube.

For example, Patent Document 1 proposes a rubber hose including a reinforcing layer formed by spirally winding a steel cord or a reinforcing layer formed by braiding a steel cord between an inner rubber layer and an outer rubber layer, wherein the steel cord has a 1×N structure (N = from 2 to 4) in which a plurality of steel braids that are not reformed are twisted together, the twist pitch of a steel filament with respect to the outer diameter of the steel cord is set within a predetermined range.

### RELATED ART DOCUMENT

### PATENT DOCUMENT

Patent Document 1: JP5969163B2

### SUMMARY OF THE INVENTION

### PROBLEMS TO BE SOLVED BY THE INVENTION

In general, in a hose with a large diameter that requires high pressure resistance, a reinforcing layer having a spiral structure is applied as a reinforcing layer. A high pressure hose including a reinforcing layer having a spiral structure, however, has a problem that the hose has high rigidity and is difficult to handle. In contrast, a high pressure hose including a reinforcing layer having a braided structure has an advantage that such a hose is easier to handle than a high pressure hose including a reinforcing layer having a spiral structure. For this reason, there is a demand for a high pressure hose including a reinforcing layer having a braided structure that can withstand high pressure.

Accordingly, an object of the present invention is to provide a high pressure hose including a reinforcing layer having a braided structure that is excellent in durability.

### MEANS FOR SOLVING THE PROBLEMS

In order to solve the above-described problem, the present inventor intensively studied to find the following. Namely, in a high pressure hose including a reinforcing layer having a braided structure, when the wire diameter of a steel filament is increased in such a manner to withstand high pressure, the flexural rigidity increases and the braiding workability deteriorates, resulting in deterioration of a product thereof. On the other hand, when a steel cord obtained by twisting thin steel filaments was used, an expected performance was not obtained in terms of durability.

The present inventor then observed an endurance fracture state of a high pressure hose including a reinforcing layer having a braided structure obtained by braiding a steel cord, and found that breakage occurs from a point where steel filaments intersect. In particular, since there was a deep rubbing trace in a portion where steel filaments constituting the steel cord intersected at a substantially right angle, it was found that this portion is the starting point of breakage. Based on this finding, the present inventor further intensively studied to find that the durability of a high pressure hose can be improved by optimizing the crossing angle between steel filaments at a portion where the steel filaments cross, thereby completing the present invention.

Specifically, the high pressure hose of the present invention is a high pressure hose including at least one reinforcing layer having a braided structure in which a steel cord formed by twisting a plurality of steel filaments is braided, wherein
a crossing angle θ between an outermost layer steel filament of an S-wound steel cord and an outermost layer steel filament of a Z-wound steel cord of a reinforcing layer having a braided structure on an innermost in a hose radial direction of the reinforcing layer having a braided structure is 76° or less. Here, S-wound is a winding method in which a steel cord runs from an upper left to a lower right when the high pressure hose is viewed from a side with an axial direction vertical, and Z-wound is a winding method in which a steel cord runs from an upper right to a lower left.

In the high pressure hose of the present invention, a twist angle of a steel filament with respect to a cord axis in the S-wound steel cord and the Z-wound steel cord is preferably from 2.8 to 10.5°. In the high pressure hose of the present invention, the crossing angle θ is preferably 76° or less in all the reinforcing layers of a braided structure. Further, in the high pressure hose of the present invention, in a cross section perpendicular to the cord axis of each steel cord constituting the reinforcing layer having a braided structure,
when an angle formed by connecting a center point of a steel filament located at an outermost in the hose radial direction and center points of both adjacent steel filaments located in the same layer as the steel filament is θo, and
when an angle formed by connecting a center point of a steel filament located at an innermost in the hose radial direction and center points of both adjacent steel filaments located in the same layer as the steel filament is θi,
the θo and the θi are preferably 108° or more.

### EFFECTS OF THE INVENTION

According to the present invention, a high pressure hose including a reinforcing layer having a braided structure excellent in durability can be obtained.

### BRIEF DESCRIPTION OF THE DRAWINGS

FIG. 1 is a cross-sectional perspective view of a high pressure hose according to a preferred embodiment of the present invention.
FIG. 2 is an explanatory view showing an example of a crossing angle of an outermost steel filament of a steel cord braided in a reinforcing layer of a braided structure.
FIG. 3 is an explanatory view showing another example of the crossing angle of an outermost steel filament of a steel cord braided in a reinforcing layer of a braided structure.
FIG. 4 is a cross-sectional view of a steel cord of a high pressure hose according to a preferred embodiment of the present invention.

### MODE FOR CARRYING OUT THE INVENTION

Hereinafter, a high pressure hose of the present invention will be described in detail with reference to the drawings.

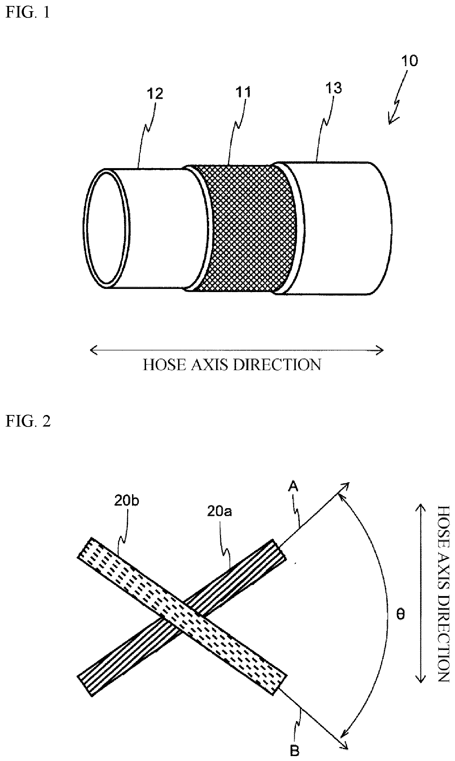

FIG. 1 is a cross-sectional perspective view of a high pressure hose according to a preferred embodiment of the present invention. The high pressure hose 10 of the present invention is a high pressure hose including at least one reinforcing layer 11 having a braided structure in which a steel cord formed by twisting a plurality of steel filaments is braided. In the illustrated high pressure hose 10, a tubular inner rubber layer 12 is formed in the innermost layer and a tubular outer rubber layer 13 is formed in the outermost layer, and a reinforcing layer 11 having a braided structure is arranged between the inner rubber layer 12 and the outer rubber layer 13. Although in the illustrated example, the reinforcing layer 11 having a braided structure is composed of one layer, a plurality of layers may be layered via an intermediate rubber layer, or only a plurality of the reinforcing layers 11 having a braided structure may be layered continuously. In the high pressure hose of the present invention, the reinforcing layer having a braided structure is composed of preferably 3 layers or less, and more preferably 2 layers or less. The high pressure hose 10 of the present invention may include a reinforcing layer using a cord other than a steel cord, such as a steel filament single wire or an organic fiber cord. For example, the hose may have a reinforcing layer made of an organic fiber cord such as vinylon, nylon, or polyethylene terephthalate (PET) on the inner side in the hose radial direction than the reinforcing layer 11 having a braided structure.

In the high pressure hose 10 according to the present invention, a crossing angle θ between an outermost layer steel filament of an S-wound steel cord and an outermost layer steel filament of a Z-wound steel cord of the reinforcing layer 11 having a braided structure composed of at least one layer on the innermost side in the hose radial direction of the reinforcing layer 11 having a braided structure is 76° or less, and preferably 72° or less. By satisfying such a relationship, it is possible to improve the durability of the high pressure hose 10 including the reinforcing layer 11 having a braided structure.

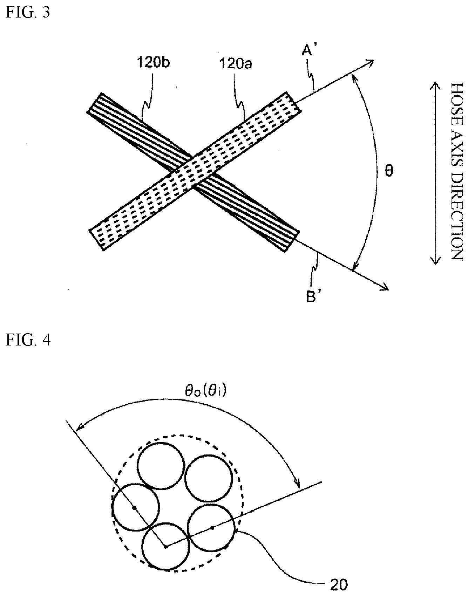

FIG. 2 is an explanatory view showing an example of a crossing angle of an outermost steel filament of a steel cord braided in a reinforcing layer of a braided structure, and FIG. 3 is an explanatory view showing another example of the crossing angle of an outermost steel filament of a steel cord braided in a reinforcing layer of a braided structure. Here, in FIG. 2, the near side is the outside in the hose radial direction and the far side is the inside in the hose radial direction, and in FIG. 3, the near side is the outside in the hose radial direction and the far side is the inside in the hose radial direction. In FIG. 2, a steel cord 20a is Z-wound and S-twisted, and a steel cord 20b is S-wound and S-twisted. In FIG. 3, a steel cord 120a is Z-wound and S-twisted, and a steel cord 120b is S-wound and S-twisted. Arrows A, A', B, and B' in the figures indicate the twist direction of a steel filament that constitutes each steel cord. Here, in FIGs. 2 and 3, steel filaments are in contact with each other on the near side in the steel cords 20a and 120b on the far side, and on the far side in the steel cords 20b and 120a on the near side. Therefore, in FIGs. 2 and 3, for the steel cords 20b and 120a on the near side, the twisting direction of the steel filament on the far side is represented by a broken line. The S-twist is a twist in which a steel filament runs from the upper left to the lower right when a steel cord is viewed from the side with the axial direction vertical. On the other hand, the Z twist is a twist in which a steel filament runs from the upper right to the lower left.

When pressure is applied to a high pressure hose including the braided reinforcing layer 11 obtained by braiding a steel cord, a greater stress is applied to the steel cord toward the inner side in the hose radial direction. Therefore, the contact pressure between steel cords of the reinforcing layer 11 having a braided structure increases due to a repeatedly applied pressure. This contact point is a portion where a repeated stress becomes maximum, fatigue fracture occurs starting from the vicinity thereof, and eventually, the high pressure hose 10 can no longer hold pressure and reaches the end of its life. At this time, with respect to contact between steel cords, when the crossing angle θ between steel filaments in the outermost layer of a steel cord approaches 90°, or, as shown in FIG. 2, when the angle between steel cords approaches perpendicular, stress concentrates in a narrow region (point contact), and fatigue durability deteriorates. Conversely, when the crossing angle θ approaches 0°, or, as shown in FIG. 3, when steel filaments approach each other in parallel, the stress is dispersed (line contact), and fatigue durability is improved.

Therefore, in the reinforcing layer 11 having a braided structure of at least one reinforcing layer 11 having a braided structure located on the innermost side in the hose radial direction, to which the greatest stress is applied, the fatigue durability of the high pressure hose 10 can be improved by reducing the crossing angle θ between an outermost steel filament of an S-wound steel cord and an outermost steel filament of a Z-wound steel cord.

The winding angle of a reinforcing material in the reinforcing layer 11 having a braided structure is preferably around 54.7° with respect to the hose axis because the distribution of force in the hose longitudinal direction and the radial direction can be made uniform. Therefore, when a steel filament single wire that is not twisted is used as a reinforcing material for the reinforcing layer 11 having a braided structure, the crossing angle θ of an S-wound steel filament and a Z-wound steel filament is 54.7 + 54.7 = 109.4°, that is, the crossing angle θ is 70.6°. However, in the high pressure hose including the reinforcing layer 11 having a braided structure in which a steel cord formed by twisting a plurality of steel filaments is used as a reinforcing material, since the reinforcing layer 11 having a braided structure is obtained by braiding an S-wound steel cord and a Z-wound steel cord, these are alternately on the outer side in the hose radial direction or on the inner side in the hose radial direction. Since a steel cord is obtained by twisting a steel filament, it is necessary to consider the twist angle of the steel filament. Here, the twist angle of the outermost steel filament with respect to the cord axis direction of a steel cord is assumed to be 7°, which is a very common angle used in a tire or the like.

Taking FIG. 2 as an example, the Z-wound steel cord is wound in the direction of 54.7° to the right with respect to the hose axis. The twist angle of the outermost layer the S-twisted steel filament in contact with the S-wound steel cord in the hose radial direction is 7° to the left with respect to the cord axis. Therefore, the outermost steel filament of the Z-wound steel cord is 54.7 - 7 = 47.7° to the right with respect to the hose axis. On the other hand, the S-wound steel cord is wound in the direction of 54.7° to the left with respect to the hose axis, and an S-twisted steel filament of the outermost layer in contact with the Z-wound steel cord has a twist angle of 7° to the right with respect to the cord axis, and therefore, 54.7 - 7 = 47.7° to the left with respect to the hose axis. As a result, the outermost layer steel filament of the S-wound steel cord and the outermost layer steel filament of the Z-wound steel cord cross at 47.7 + 47.7 = 95.4°, or at a crossing angle θ of 84.6°, which is a severe angle close to a right angle.

Next, taking FIG. 3 as an example, the Z-wound steel cord is wound in the direction of 54.7° to the right with respect to the hose axis, and the twist angle inside the hose radial direction of the outermost S-twisted steel filament in contact with the S-wound steel cord is 7° to the right with respect to the cord axis. Therefore, the outermost steel filament of the Z-wound steel cord is 54.7 + 7 = 61.7° to the right with respect to the hose axis. On the other hand, the S-wound steel cord is wound in the direction of 54.7° to the left with respect to the hose axis. The twist angle of the outermost layer S-twisted steel filament in contact with the Z-wound steel cord in the hose radial direction is 7° to the left with respect to the cord axis. Therefore, the outermost steel filament of the S-wound steel cord is 54.7 + 7 = 61.7° to the left with respect to the hose axis. As a result, a steel filament of the Z-wound steel cord and a steel filament of the S-wound steel cord cross at an angle of 61.7 + 61.7 = 123.4 °, or a crossing angle θ of 56.6°.

As described above, the relationship between the crossing angle θ between an outermost layer steel filament of a steel cord constituting the reinforcing layer 11 having a braided structure and the durability of a high pressure hose was studied, and when the crossing angle θ was 76° or less, the durability of a high pressure hose was considerably improved. Therefore, in the high pressure hose 10 of the present invention, the crossing angle θ between an outermost layer steel filament of S-wound steel cord and an outermost layer steel filament of Z-wound steel cord of the reinforcing layer 11 having a braided structure on the innermost in the hose radial direction of the reinforcing layer 11 having a braided structure is set to 76° or less.

In the high pressure hose 10 of the present invention, the crossing angle θ is preferably 76° or less not only in the reinforcing layer 11 having a braided structure on the innermost in the hose radial direction of the reinforcing layers 11 having a braided structure but also in all reinforcing layers having a braided structure. By employing such a structure, the fatigue durability of the high pressure hose 10 can be further improved.

Examples of the method of adjusting the crossing angle θ between an outermost layer steel filament of an S-wound steel cord constituting the reinforcing layer 11 having a braided structure and an outermost layer steel filament of a Z-wound steel cord in the high pressure hose 10 of the present invention to 76° or less include appropriately designing the winding angle of these steel cords or the twist pitch of the steel filament. For example, the twisting direction of the outermost layer steel filament of the S-wound steel cord and the twisting direction of the outermost layer steel filament of the Z-wound steel cord may be different from each other.

For example, a case of using steel cords with different twist directions instead of using the same steel cord as the S-wound steel cord and the Z-wound steel cord, here a case of using an S-twisted Z-wound steel cord and a Z-twisted S-wound steel cord is considered. When a Z-wound steel cord crosses inside the hose radial direction and an S-wound steel cord crosses outside the hose radial direction, the Z-wound steel cord is wound in the direction of 54.7° to the right with respect to the hose axis, the twist angle of the outermost layer S-twisted steel filament on the outer side in the hose radial direction is 7° to the left with respect to the cord axis, and therefore, 54.7 - 7 = 47.7° to the right with respect to the hose axis. On the other hand, an S-wound steel cord is wound in the direction of 54.7° to the left with respect to the hose axis, and the twist angle on the inner side in the hose radial direction of the outermost layer Z-twisted steel filament in contact with a Z-wound steel cord is 7° to the left with respect to the cord axis, and therefore 54.7 + 7 = 61.7° to the left with respect to the hose axis. As a result, the outermost steel filament of the S-wound steel cord and the outermost steel filament of the Z-wound steel cord cross at an angle of 47.7 + 61.7 = 109.4°, or a crossing angle θ of 70.6°. Similarly, when a Z-twisted Z-wound steel cord and an S-twisted S-wound steel cord are used, the crossing angle θ is 70.6°.

In the high pressure hose 10 of the present invention, the twist angle of the steel filament with respect to the cord axis of the S-wound steel cord and the Z-wound steel cord of the reinforcing layer 11 having a braided structure is preferably from 2.8 to 10.5°. When the twist angle of a steel filament is 2.8° or more, the twist pitch is not too long, and it is possible to prevent a steel cord from being scattered during manufacture of a high pressure hose, which is preferable in view of molding workability. On the other hand, the strength of a high pressure hose can be favorably obtained by setting the twist angle of a steel filament to 10.5° or less. The twist angle of a steel filament is more preferably from 3.2° to 9°, still more preferably from 3° to 8°, and particularly preferably from 3.5° to 7°.

In the high pressure hose 10 of the present invention, the structure of a steel cord constituting the reinforcing layer 11 having a braided structure is not particularly limited. Examples thereof include a 1 × n structure steel cord in which n (n ≥ 5) steel filaments are twisted together around the cord center axis without a core, an (m + p) structure steel cord in which a core formed by twisting or untwisting m (m = from 1 to 3) steel filaments is provided with a sheath layer in which p (p = from 5 to 9) steel filaments are twisted together, and an (m + p + q) structure steel cord in which an (m + p) structure steel cord is further provided with a sheath layer in which q (q = from 10 to 13) steel filaments is twisted together. A so-called compact structure in which all layers are twisted in the same direction and the same pitch may be used. In the high pressure hose 10 of the present invention, for example, since the cross-sectional shape of a steel cord in which m (m = 2 or 3) steel filaments are formed without being twisted and p (p = from 5 to 9) steel filaments are twisted together is flat, the end count of steel cords in the reinforcing layer 11 having a braided structure can be reduced and the reinforcing layer 11 having a braided structure itself can be thinned, which is preferable in terms of excellent lightweight and cost. m, p, and q which show the twist structure of a steel cord are any integers in the above range. When steel filaments are twisted together, all or a part of the steel filaments constituting a cord may be reformed into a spiral, a polygon, a corrugated shape, or the like. Examples of the polygonal reforming include a reforming described in WO 1995/016816.

Next, FIG. 4 shows a cross-sectional view of a steel cord according to a high pressure hose of a preferred embodiment of the present invention. A steel cord 20 in which steel filaments are twisted together has unevenness on the surface due to twists. In a reinforcing layer 11 having a braided structure obtained by braiding such a steel cord 20, when convex portions generated by the twists contact with each other, stress is concentrated repeatedly between the convex portions on the surface of the steel cord 20, and the fatigue resistance is deteriorated. Such a problem becomes noticeable as the convex portion is sharper.

Accordingly, in the high pressure hose 10 of the present invention, in a cross section perpendicular to the cord axis of each steel cord constituting the reinforcing layer 11 having a braided structure, when the angle formed by connecting the center point of a steel filament located at the outermost in the hose radial direction and the center points of both adjacent steel filaments located in the same layer as the steel filament is θo, and when the angle formed by connecting the center point of a steel filament located at the innermost in the hose radial direction and the center points of both adjacent steel filaments located in the same layer as the steel filament is θi, the θo and the θi are preferably 108° or more.

Here, in the illustrated example, although a (1 × 5) structure steel cord is used, in the case of a (1 × n) structure single-twisted steel cord, each steel filament constituting the steel cord is in the same layer. In order to obtain the above-described effect satisfactorily, θo and θi are preferably obtuse angles, and θo and θi are preferably 120° or more, and more preferably 128° or more.

In the high pressure hose 10 of the present invention, it is important that, of the reinforcing layer having a braided structure, the crossing angle θ between an outermost layer steel filament of an S-wound steel cord and an outermost layer steel filament of an Z-wound steel cord of the reinforcing layer 11 having a braided structure in the innermost hose radial direction is 76° or less, and other specific structures and materials are not particularly limited. For example, in a reinforcing layer having a braided structure, when braiding steel cords, the steel cords may be braided one by one, or a plurality of steel cords may be bundled and braided.

For a steel filament constituting a steel cord, a known one can be used, and the wire diameter is preferably from 0.12 to 0.40 mm. Further, the winding angle of a steel cord in the reinforcing layer 11 having a braided structure is preferably from 50 to 60°. When the wire diameter is 0.12 mm or more, the wire drawing productivity of a steel filament is excellent, and when the wire diameter is 0.40 mm or less, the strength per cross-sectional area can be sufficiently secured, and the flexural rigidity proportional to the fourth power of the diameter can be kept sufficiently low. When the winding angle of a steel cord is 50° or more, change in the hose diameter when pressure is applied to the hose can be reduced, and when the angle is less than 60°, change in hose length when pressure is applied to the hose can be reduced.

Further, rubber used for the high pressure hose 10 is not particularly limited, and the material of the inner rubber layer 12 can be appropriately selected based on the physical and chemical properties of a substance transported in the high pressure hose 10. Specific examples thereof include ethylene-propylene copolymer rubber (EPM), ethylene-propylene-diene terpolymer rubber (EPDM), acrylic rubber (ACM), ethylene acrylate rubber (AEM), chloroprene rubber (CR), chlorosulfonated polyethylene rubber, hydrin rubber, styrene-butadiene copolymer rubber (SBR), acrylonitrile-butadiene copolymer rubber (NBR), isobutylene-isoprene copolymer rubber (butyl rubber, IIR), natural rubber (NR), isoprene rubber (IR), butadiene rubber (BR), urethane rubber, silicone rubber, fluorine rubber, ethylene-vinyl acetate copolymer (EVA), and hydrogenated NBR. These rubber components may be used singly, or may be used in any blend of two or more kinds thereof.

Among the above-described rubber components, from the viewpoint of oil resistance, acrylic rubber (ACM), ethylene acrylate rubber (AEM), chloroprene rubber (CR), chlorosulfonated polyethylene rubber, hydrin rubber, acrylonitrile-butadiene copolymer rubber (NBR), hydrogenated NBR, silicone rubber, or fluorine rubber is preferable.

Still further, for a rubber composition for the inner rubber layer 12, a known rubber compounding chemical and rubber filler generally used in the rubber industry can be used in consideration of material strength, durability, extrusion moldability, and the like. Examples of such compounding chemicals and fillers include an inorganic filler such as carbon black, silica, calcium carbonate, talc, or clay; a plasticizer, a softener; a vulcanizing agent such as sulfur or a peroxide; a vulcanization aid such as zinc oxide or stearic acid; a vulcanization accelerator such as dibenzothiazyl disulfide, *N*-cyclohexyl-2-benzothiazyl-sulfenamide, or *N*-oxydiethylene-benzothiazyl-sulfenamide; and an additive such as an antioxidant or an ozone degradation inhibitor. These compounding chemicals and fillers may be used singly or in combination of two or more kinds thereof.

The thickness of the inner rubber layer 12 varies depending on the type of material constituting the inner rubber layer 12, and is in the range of from 1 to 10 mm, and preferably in the range of from 1 to 6 mm. The inner diameter of the high pressure hose is selected according to a purpose, and is usually preferably in the range of from 3 mm to 200 mm.

Like a conventional high pressure hose, the outer rubber layer 13 can be made of a thermoplastic resin or the like, and may be made of various rubbers similar to the inner rubber layer 12. By providing the outer rubber layer 13, a steel cord constituting the reinforcing layer 11 is protected, damage to the reinforcing layer 11 can be prevented, and the appearance is also preferable. Usually, the thickness of the outer rubber layer 13 is in the range of from 1 mm to 20 mm.

Further, an intermediate rubber layer can be formed of various rubbers similar to the inner rubber layer 12.

The high pressure hose of the present invention can be produced according to a conventional method, and is particularly useful as a high pressure hose used for transporting various high pressure fluids or a high pressure hose used to pump a hydraulic pump hydraulic oil to a working portion.

Hereinafter, the present invention will be described in more detail with reference to Examples.

### <Examples 1 to 10 and Comparative Examples 1, 2>

Using a steel cord shown in Tables 1 to 3, a high pressure hose including a reinforcing layer having a braided structure was produced. In the case of a high pressure hose including one reinforcing layer having a braided structure, a high pressure hose of a type shown in FIG. 1 was prepared, and in the case of a high pressure hose including two layers of reinforcing layers having a braided structure, a type in which two reinforcing layers having a braided structure were layered via an intermediate rubber layer was prepared. The winding angles of an S-wound steel cord and a Z-wound steel cord were 54.7°, respectively. Each of the obtained high pressure hoses was evaluated for impact durability according to the following procedure.

### <Impact Durability>

An impact pressure test in accordance with JIS K6330-8 was conducted, and the number of pressure tests conducted until each high pressure hose burst was recorded. Tables 1 to 3 list the number of pressure tests for each high pressure hose.

**[Table 1]**

| | | | Comparative Example 1 | Comparative Example 2 | Example 1 | Example 2 |
|---|---|---|---|---|---|---|
| Cord structure | First braided layer ^{*1} | | 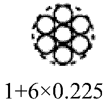 | 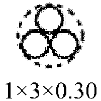 | 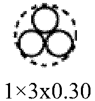 | 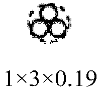 |
| | Second br aided layer ^{*2} | | - | - | - | - |
| Twist direction of outermost layer steel filament | First braided layer | Z-wound steel cord | S | S | S | S |
| | | S-wound steel cord | S | S | S | Z |
| | Second braided layer | Z-wound steel cord | - | - | - | - |
| | | S-wound steel cord | - | - | - | - |
| Twist angle (°) of outermost layer steel filament | First braided layer | Z-wound steel cord | 7 | 3.9 | 2.6 | 3.9 |
| | | S-wound steel cord | 7 | 3.9 | 2.6 | 3.9 |
| | Second braided layer | Z-wound steel cord | - | - | - | - |
| | | S-wound steel cord | - | - | - | - |
| Crossing angle (°) of outermost layer steel filament | First braided layer | Z-wound inside, S-wound outside ^{*3} | 84.6 | 78.4 | 75.8 | 70.6 |
| | | S-wound inside, Z-wound outside ^{*4} | 56.6 | 62.8 | 65.4 | 70.6 |
| | Second braided layer | Z-wound inside, S-wound outside ^{*3} | - | - | - | - |
| | | S-wound inside, Z-wound outside ^{*4} | - | - | - | - |
| θo, θi(°) of first braided layer | | | 120 | 60 | 60 | 60 |
| Impact durability (10,000 times) | | | 9 | 8 | 40 | 60 |

| | | | | | | |
|---|---|---|---|---|---|---|
| *1: First reinforcing layer having a braided structure counting from the hose radial inner side *2: Second reinforcing layer having a braided structure counting from the hose radial inner side *3: Portion where Z-wound steel cord is inside and S-wound steel cord is outside *4: Portion where S-wound steel cord is inside and Z-wound steel cord is outside | | | | | | |

**[Table 2]**

| | | | Example 3 | Example 4 | Example 5 | Example 6 |
|---|---|---|---|---|---|---|
| Cord structure | First braided layer ^{*1} | | 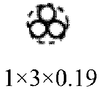 | 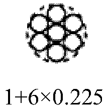 | 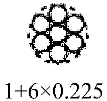 | 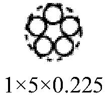 |
| | Second braided layer ^{*2} | | 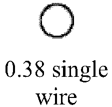 | - | 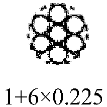 | - |
| Twist direction of outermost layer steel filament | First braided layer | Z-wound steel cord | S | S | S | S |
| | | S-wound steel cord | Z | Z | Z | Z |
| | Second braided layer | Z-wound steel cord | - | - | S | - |
| | | S-wound steel cord | - | - | Z | - |
| Twist angle (°) of outermost layer steel filament | First braided layer | Z-wound steel cord | 7 | 7 | 7 | 3.9 |
| | | S-wound steel cord | 7 | 7 | 7 | 3.9 |
| | Second braided layer | Z-wound steel cord | 0 | - | 7 | - |
| | | S-wound steel cord | 0 | - | 7 | - |
| Crossing angle (°) of outermost layer steel filament | First braided layer | Z-wound inside, S-wound outside ^{*3} | 70.6 | 70.6 | 70.6 | 70.6 |
| | | S-wound inside, Z-wound outside ^{*4} | 70.6 | 70.6 | 70.6 | 70.6 |
| | Second braided layer | Z-wound inside, S-wound outside ^{*3} | 70.6 | - | 70.6 | - |
| | | S-wound inside, Z-wound outside ^{*4} | 70.6 | - | 70.6 | - |
| θo, θ1(°) of first braided layer | | | 60 | 120 | 120 | 108 |
| Impact durability (10,000 times) | | | 70 | 80 | 80 | 70 |

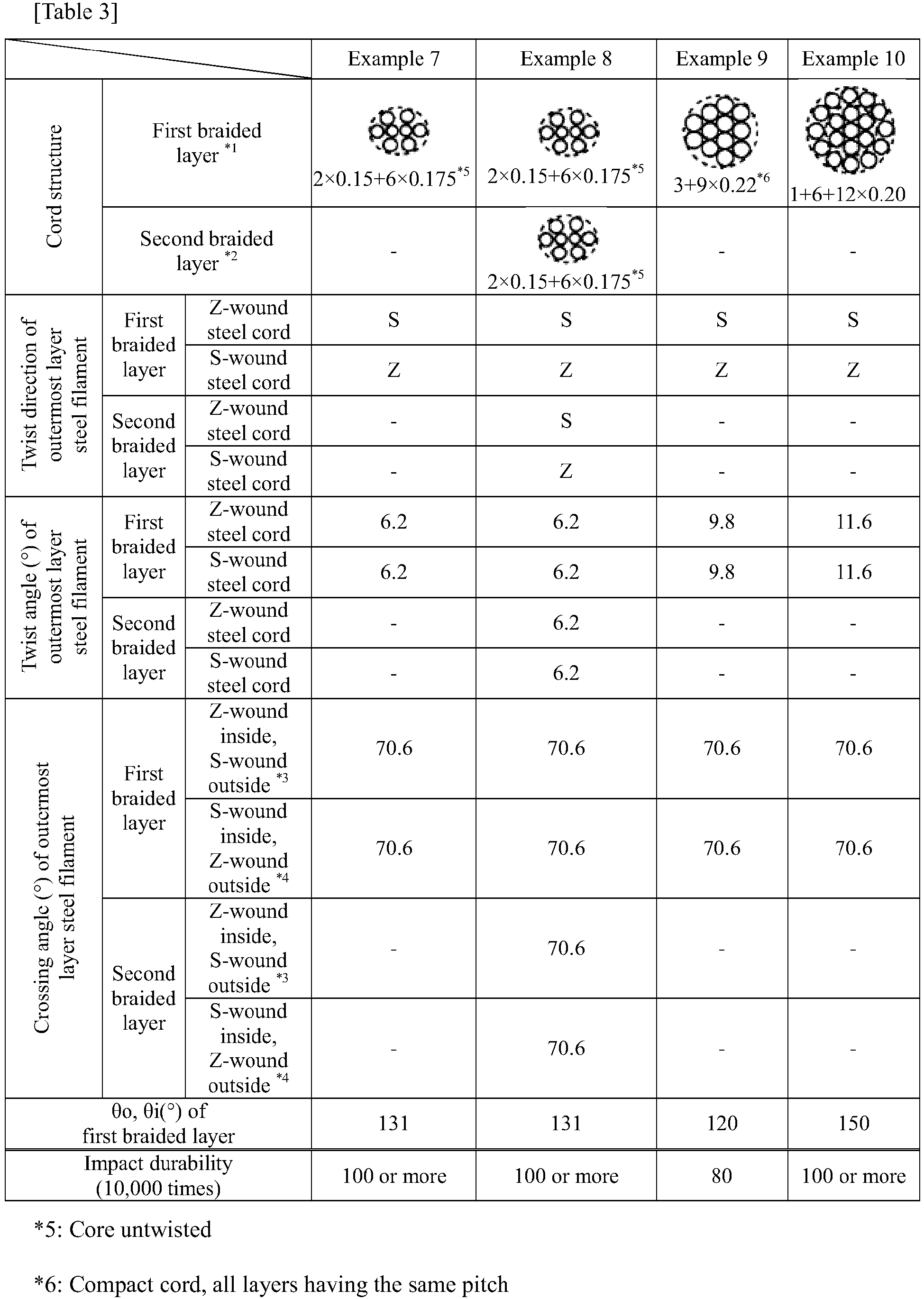

Tables 1 to 3 show that the high pressure hose of the present invention has excellent impact durability.

### DESCRIPTION OF SYMBOLS

- 10: High pressure hose
- 11: Reinforcing layer having a braided structure
- 12: Inner rubber layer
- 13: Outer rubber layer
- 20, 120: Steel cord

## Claims

1. A high pressure hose comprising at least one reinforcing layer having a braided structure in which a steel cord formed by twisting a plurality of steel filaments is braided, wherein
a crossing angle θ between an outermost layer steel filament of an S-wound steel cord and an outermost layer steel filament of a Z-wound steel cord of a reinforcing layer having a braided structure on an innermost in a hose radial direction of the reinforcing layers having a braided structure is 76° or less.

2. The high pressure hose according to claim 1, wherein a twist angle of a steel filament with respect to a cord axis in the S-wound steel cord and the Z-wound steel cord is from 2.8 to 10.5°.

3. The high pressure hose according to claim 1 or 2, wherein the crossing angle θ is 76° or less in all the reinforcing layers of a braided structure.

4. The high pressure hose according to any one of claims 1 to 3, wherein,
in a cross section perpendicular to the cord axis of each steel cord constituting the reinforcing layer having a braided structure,
when an angle formed by connecting a center point of a steel filament located at an outermost in the hose radial direction and center points of both adjacent steel filaments located in the same layer as the steel filament is θo, and
when an angle formed by connecting a center point of a steel filament located at an innermost in the hose radial direction and center points of both adjacent steel filaments located in the same layer as the steel filament is θi,
the θo and the θi are preferably 108° or more.
